# EUROPÄISCHE PATENTSCHRIFT

(11) **EP 2 820 024 B1**
(45) Veröffentlichungstag und Bekanntmachung des Hinweises auf die Patenterteilung: **12.08.2015**
(21) Anmeldenummer: 13705819.4
(22) Anmeldetag: 26.02.2013
(51) Int. Cl.: C07F 7/18, C08J 7/12

(54) **ORGANOSILICIUMVERBINDUNGEN UND DEREN VERWENDUNG ZUR HERSTELLUNG VON HYDROPHILEN OBERFLÄCHEN**
ORGANOSILICON COMPOUNDS AND THEIR USE FOR PRODUCING HYDROPHILIC SURFACES
COMPOSÉS D'ORGANOSILICIUM ET UTILISATION DESDITS COMPOSÉS POUR PRODUIRE DES SURFACES HYDROPHILES

(30) Priorität: 01.03.2012 DE 102012203267
(43) Veröffentlichungstag der Anmeldung: 07.01.2015
(73) Patentinhaber: Wacker Chemie AG, 81737 München (DE)
(72) Erfinder: SCHEIM, Uwe, 01640 Coswig (DE); BROOK, Michael, A., Ancaster, Ontario L9G 4M4 (CA); CHEN, Yang, Ancaster, Ontario L9K 1K5 (CA)
(74) Vertreter: Budczinski, Angelika
(86) Internationale Anmeldenummer: PCT/EP2013/053786
(87) Internationale Veröffentlichungsnummer: WO 2013/127771

(56) Entgegenhaltungen:
- WO-A1-2011/022827
- LI, JING ET AL: "Synthesis of Polyethylene Glycol (PEG) Derivatives and PEGylated-Peptide Biopolymer Conjugates", BIOMACROMOLECULES , 4(4), 1055-1067 CODEN: BOMAF6; ISSN: 1525-7797, 2003, XP002697820,

## Beschreibung

Die Erfindung betrifft Organosiliciumverbindungen, Verfahren zu deren Herstellung, deren Verwendung zur Herstellung von hydrophilen Oberflächen sowie Siliconelastomere mit hydrophilen Oberflächen. Insbesondere betrifft die Erfindung Verbindungen, die bei Zusatz zu härtbaren Mischungen diesen nach dem Aushärten eine hydrophile Oberfläche verleihen, oder die nach dem Aushärten auf die Oberfläche der Siliconelastomere aufgetragen werden können, wobei sie sich auf der Oberfläche verankern und somit den Siliconelastomeren eine hydrophile Oberfläche verleihen.

Li J. et al in Biomacromolecules, 2003, 4, 1055-1067 offenbart Verbindungen und deren Verwendung zur Erzeugung von hydrophilen Oberflächen.

Polydimethylsiloxanelastomere sind, abhängig von der Rezeptur, weiche, sehr flexible Materialien mit einer Reihe von vorteilhaften Eigenschaften wie außerordentliche thermische und elektrische Stabilität, hohe optische Transparenz, gute Gasdurchlässigkeit und hohe Elastizität auch bei sehr niedrigen Temperaturen. Die hohe Hydrophobie dieser Elastomere ist auch oft von Vorteil bei Anwendungen, wo Wasserabweisung erwünscht ist. Allerdings kann die niedrige Oberflächenenergie, die Polydimethylsiloxanoberflächen zeigen, auch von Nachteil sein, insbesondere dann, wenn biologische Einheiten an der Oberfläche absorbieren. Beispielsweise ist die Hydrophobie, d.h. schlechte Benetzbarkeit der Oberfläche von Polydimethylsiloxanen dafür verantwortlich, dass die Oberflächen anfällig für sog. "fouling" durch Proteine oder Lipide werden. Organismen sind in der Lage mit überraschender Hartnäckigkeit an Siliconoberflächen zu haften und sich dann zu vermehren.

Biologische Moleküle und Organismen zeigen dagegen an bestimmten Typen von hydrophilen Oberflächen eine deutlich geringer effiziente Haftung. Beispielsweise sind Poly(ethylenglycol) (PEG)-modifizierte Oberflächen dafür bekannt Proteine abzustoßen und Zellhaftung zu verringern. Andere Strategien wie die Verankerung von Polysacchariden, Proteinen und oberflächenaktiven Molekülen reduzieren ebenfalls die Neigung von Polymeroberflächen zum Fouling.

Hauptsächlich zwei Strategien wurden verfolgt um die Hydrophilie von Siliconoberflächen zu vergrößern. Die erste schließt Sauerstoffplasmabehandlung, UV-Bestrahlung und Coronaentladung ein, wobei bei allen Methoden oberflächliche OH-Gruppen erzeugt werden. Ein Nachteil dieser Vorgehensweise ist der, dass die Oberfläche dabei geschädigt werden kann, neben dem apparativen Aufwand, der für die Durchführung dieser Behandlung nötig ist. Alternativ dazu können hydrophile Materialien an der Oberfläche absorbiert, angebunden (z.B. Poly(ethylenglycol)) oder durch Copolymerisation in das Material eingebracht werden. Beide Strategien haben Nachteile. Siliconpolymere besitzen eine hohe Mobilität und zeigen eine Oberflächenreversion. Dabei geraten die hydrophilen Materialien wieder unterhalb der mobilen Siliconpolymere, da letztere zur Grenzfläche zur Luft migrieren. Obwohl man Siliconelastomeroberflächen derartig hydrophil machen kann, dass selbst Randwinkel von 0° erreicht werden, regeneriert sich die Hydrophobie der Oberflächen in der Regel innerhalb kurzer Zeit.

Um diese Problematik zu beseitigen wurde in WO-A 11022827 vorgeschlagen, allyl-modifizierte Polyethylenglycole der Struktur 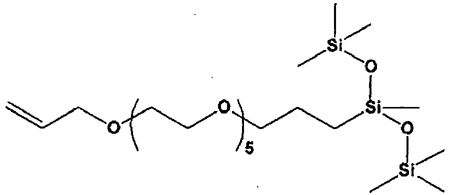 an Siliconoberflächen durch Addition an oberflächliche Si-H-Gruppen mittels Hydrosilylierung anzubinden. Bei verhältnismäßig hoher Konzentration dieser Gruppen an der Oberfläche konnten so Kontaktwinkel von weniger als 10° erreicht werden. Diese Verbindungen unterliegen jedoch einer hydrolytischen Spaltung der Trisiloxangruppe, wobei die Hydrophilie der Oberfläche sich dadurch im Laufe der Zeit wieder deutlich verringert. Darüber hinaus sind diese Verbindungen nur geeignet, Si-H-haltige Oberflächen zu modifizieren.

Überraschenderweise wurde nun gefunden, dass Verbindungen, die eine Oligo(ethylenglycol)-Kette, die an einem Ende eine Acrylsäurefunktion und an dem anderen Ende eine Triorganosilylgruppe tragen, ausgezeichnet in der Lage sind permanente Hydrophilie zu erzeugen, insbesondere auf Siliconoberflächen.

Gegenstand der Erfindung sind Verbindungen der Formel 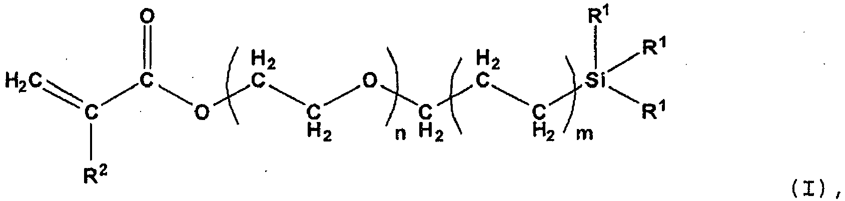 wobei
R¹ gleich oder verschieden sein kann und Kohlenwasserstoffreste bedeutet,
R² Wasserstoffatom oder Methylrest bedeutet,
n eine ganze Zahl von 6 bis 11 ist und
m 0 oder 1 ist,
mit der Maßgabe, dass die Summe der Anzahl der Kohlenstoffatome in den drei Resten R¹ in der Verbindung der Formel (I) 6 bis 24 beträgt.

Beispiele für Reste R¹ sind Alkylreste, wie der Methyl-, Ethyl-, n-Propyl-, iso-Propyl-, 1-n-Butyl-, 2-n-Butyl-, isoButyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest, iso-Octylreste und der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Bevorzugt handelt es sich bei Rest R¹ um Alkylreste mit 1 bis 12 Kohlenstoffatomen, besonders bevorzugt um Ethyl-, n-Propyl-, n-Butyl-, n-Pentyl- oder n-Hexylreste, insbesondere um den n-Hexylrest.

Bevorzugt haben die Reste R¹ in Formel (I) die gleiche Bedeutung.

Bevorzugt ist n 6, 7, 8 oder 9.

Beispiele für die erfindungsgemäßen Verbindungen der Formel (I) sind

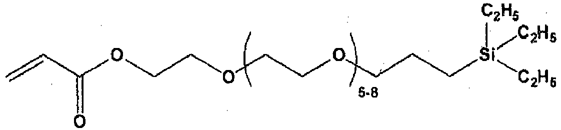

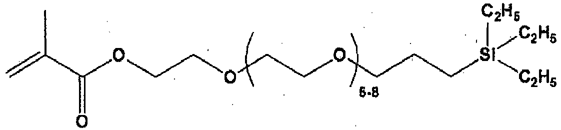

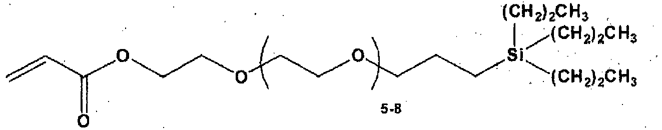

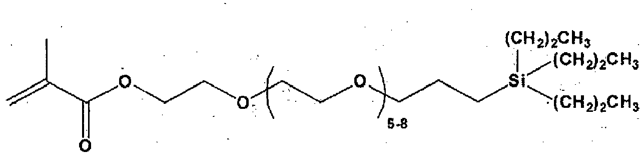

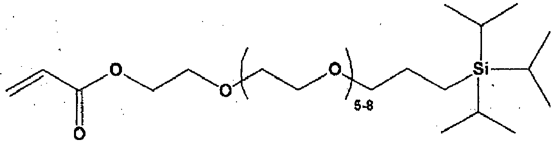

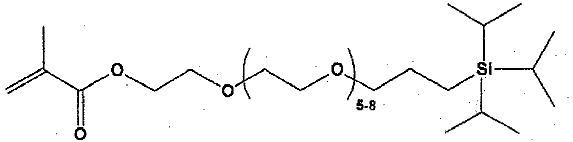

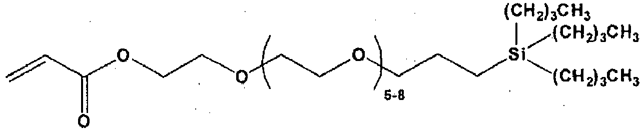

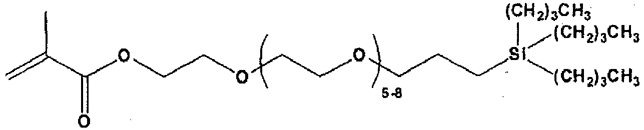

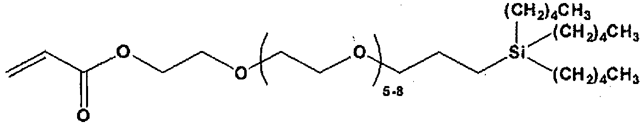

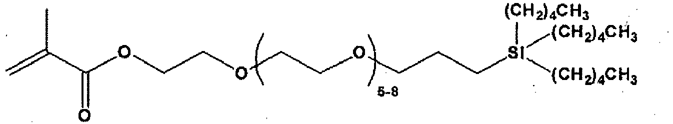

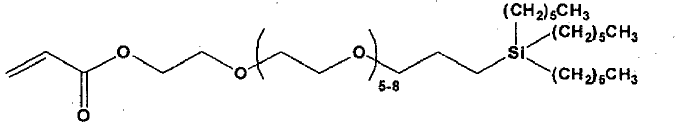

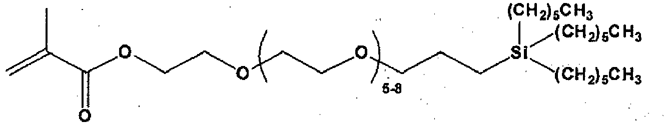

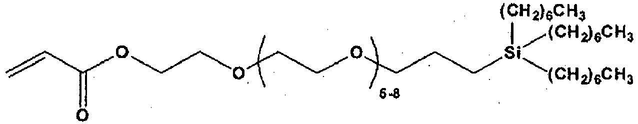

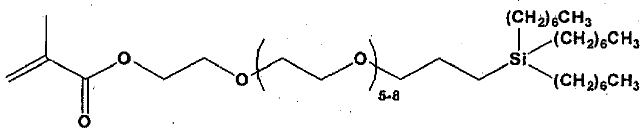

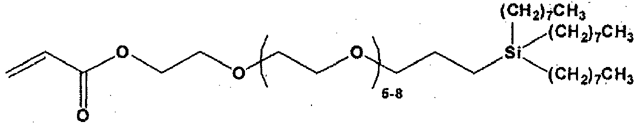

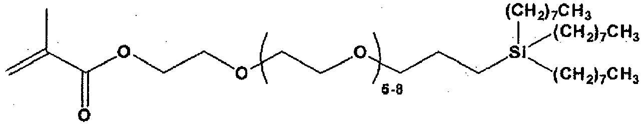

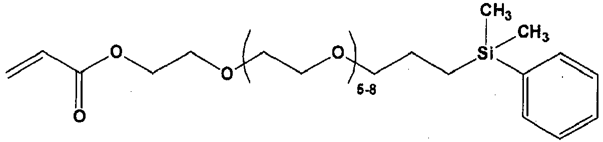

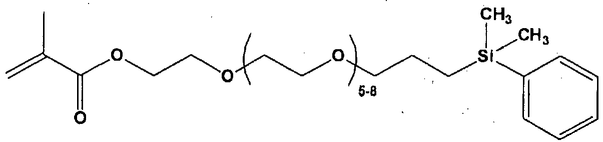

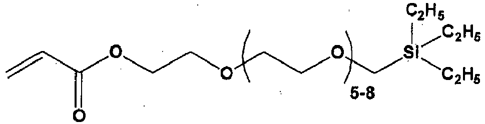

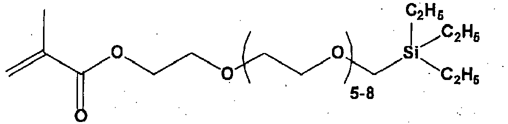

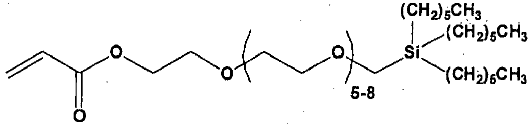

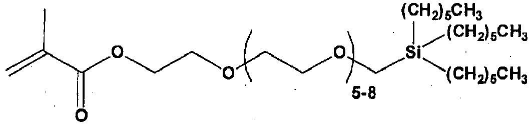

Bevorzugt handelt es sich bei den erfindungsgemäßen Verbindungen um 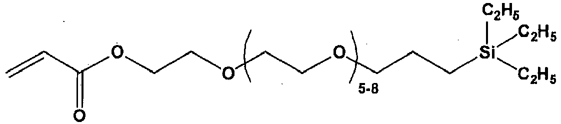 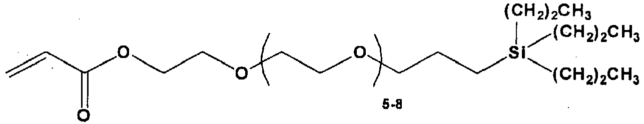 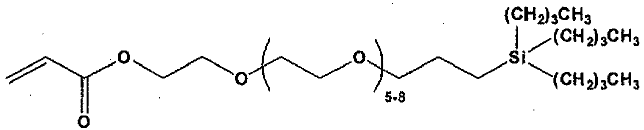 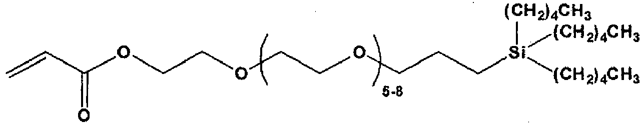 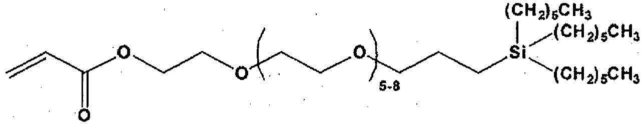 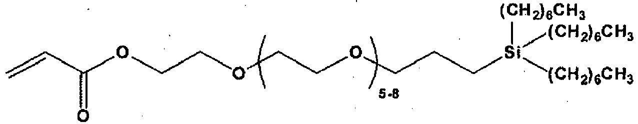 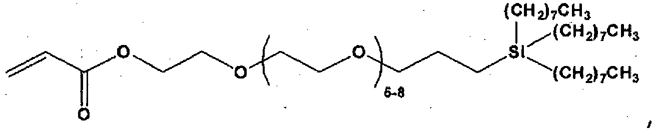 besonders bevorzugt um

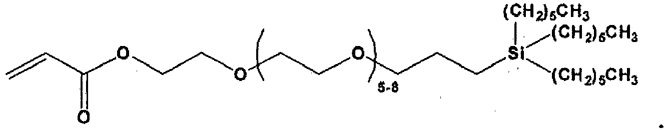

Die erfindungsgemäßen Verbindungen sind bei Raumtemperatur und 1013 hPa bevorzugt wasserklare bis leicht trübe, farblose bis gelbliche Flüssigkeiten.

Die erfindungsgemäßen Verbindungen der Formel (I) können nach in der Chemie üblichen Methoden hergestellt werden. Beispielsweise kann zunächst der silylsubstituierte Polyether durch Addition von Trialkylsilanen an handelsübliche einseitig allylterminierte Polyethylenglycole, katalysiert mit Tris(triphenylphosphin)rhodium(I)chlorid hergestellt werden. Das so hergestellte einseitig durch 3-Trialkylsilylpropylgruppen terminierte Polyethylenglycol wird anschließend mit Acrylsäurechlorid oder Methacrylsäurechlorid in Anwesenheit eines HCl-Acceptors in einem Lösungsmittel, wie z.B. Triethylamin in Diethylether, umgesetzt.

Ein weiterer Gegenstand der Erfindung ist ein Verfahren (Verfahren 1) zur Herstellung der Verbindungen der Formel (I), bevorzugt mit m=1, durch Addition von Triorganylsilanen an Polyethylenglycole, die an einem Ende eine OH-Gruppe tragen und am anderen Ende Reste mit aliphatischen Kohlenstoff-Kohlenstoff-Mehrfachbindungen aufweisen, in Anwesenheit von die Anlagerung von Si-gebundenem Wasserstoff an aliphatische Mehrfachbindung fördernden Katalysator und anschließender Umsetzung mit Acrylsäurechlorid oder Methacrylsäurechlorid.

Bei den Organylgruppen der im erfindungsgemäßen Verfahren 1 eingesetzten Silane handelt es sich um SiC-gebundene Kohlenwasserstoffe, bevorzugt um die bei Rest R¹ genannten Reste.

Das erfindungsgemäße Verfahren 1 kann bei den gleichen Bedingungen durchgeführt werden, wie auch die bisher bekannten Hydrosilylierungsverfahren.

Das erfindungsgemäße Verfahren 1 wird bevorzugt bei Temperaturen zwischen 20 und 100°C beim Druck der umgebenden Atmosphäre, d.h. in der Regel etwa 1013 hPa, durchgeführt. Bevorzugt wird die Hydrosilylierung, vorzugsweise die Umsetzung von α-Allyl-ω-hydroxypoly(ethylenglycol) mit Trialkylsilan, ohne Zusatz eines Lösungsmittels durchgeführt.

Als Katalysator wird im erfindungsgemäßen Verfahren 1 bevorzugt Tris(triphenylphosphin)rhodium(I)chlorid eingesetzt.

Nach erfolgter Hydrosilylierung kann die Reaktionsmischung nach bisher bekannten Verfahren aufgearbeitet werden. Bevorzugt wird dabei das Reaktionsprodukt in einem mit Wasser mischbaren Lösungsmittel, vorzugsweise THF, aufgenommen und mit Wasser und geringen Menge einer Säure versetzt, um etwa gebildete Si-O-C-Bindungen zu beseitigen, die sich durch Reaktion der OH-Gruppe des Polyethers mit Si-gebundenem Wasserstoff bilden können. Nach beendeter Umsetzung, die bei Raumtemperatur ca. 12 Stunden dauert, wird die Säure bevorzugt neutralisiert, vorzugsweise mit MgO. Schließlich wird das Lösungsmittel, vorzugsweise THF und Wasser, bevorzugt entfernt und der Rückstand mit Acetonitril aufgenommen. Die als Nebenprodukt gebildeten Siloxane können durch Extraktion der Acetonitril-Lösung des Produktes mit n-Hexan entfernt werden. Eine weitere Reinigung des Produkts kann durch Behandlung mit Silicagel erfolgen.

Bevorzugt werden für die Umsetzung des erhaltenen mit Silylgruppen terminierten Polyethylenglycols, insbesondere des mit 3-Trialkylsilylpropylgruppen terminierten Polyethylenglycols, mit Acrylsäurechlorid oder Methacrylsäurechlorid ein Lösungsmittel und ein HCl-Akzeptor verwendet, wobei es sich bei dem HCl-Akzeptor vorzugsweise um ein tertiäres Amin und bei dem Lösungsmittel bevorzugt um Diethylether handelt. Das dabei sich bildende Aminhydrochlorid kann dann durch Filtration abgetrennt werden.

In einem weiteren möglichen Verfahren (Verfahren 2) zur Herstellung der erfindungsgemäßen Verbindungen der Formel (I) mit m=0 wird zunächst ein Hydroxymethyltriorganylsilan mit Etylenoxid in Gegenwart von an sich bekannten Katalysatoren (Basen, Zinkhexacyanocobaltat) umgesetzt. Die auf diese Weise erhaltenen einseitig mit einer Triorganylsilylmethylgruppe abgeschlossenen Polyethylenglycole werden anschließend mit Acrylsäurechlorid oder Methacrylsäurechlorid in Anwesenheit von z.B. Triethylamin in Diethylether als Lösungsmittel zu den Zielverbindungen der Formel (I) umgesetzt.

Ein weiterer Gegenstand der Erfindung ist ein Verfahren (Verfahren 2) zur Herstellung der erfindungsgemäßen Verbindungen der Formel (I) mit m=0, dadurch gekennzeichnet, dass zunächst ein Hydroxymethyltriorganylsilan mit Etylenoxid umgesetzt wird und das erhaltene, einseitig mit einer Triorganylsilylmethylgruppe terminierte Polyethylenglycol anschließend mit Acrylsäurechlorid oder Methacrylsäurechlorid zur Reaktion gebracht wird.

Bevorzugt wird bei dem erfindungsgemäßen Verfahren 2 die Umsetzung Hydroxymethyltriorganylsilan mit Etylenoxid in Gegenwart von Katalysatoren, wie z.B. Basen, Zinkhexacyanocobaltat, durchgeführt.

Bevorzugt wird bei dem erfindungsgemäßen Verfahren 2 die Umsetzung des einseitig mit einer Triorganylsilylmethylgruppe terminierten Polyethylenglycols mit Acrylsäurechlorid oder Methacrylsäurechlorid in Anwesenheit von Lösungsmittel durchgeführt.

Bei den in den erfindungsgemäßen Verfahren eingesetzten Komponenten kann es sich jeweils um eine Art einer solchen Komponente wie auch um ein Gemisch aus mindestens zwei Arten einer jeweiligen Komponente handeln.

Die in den erfindungsgemäßen Verfahren eingesetzten Komponenten sind handelsübliche Produkte bzw. können nach in der Chemie gängigen Verfahren hergestellt werden.

Die erfindungsgemäßen bzw. erfindungsgemäß hergestellten Verbindungen der Formel (I) können nun für beliebige Zwecke eingesetzt werden, wie z.B. zur Oberflächenmodifikation von Substraten und Gegenständen.

Die erfindungsgemäßen Verbindungen der Formel (I) werden bevorzugt mit aminofunktionellen Alkoxysil(oxan)ylkomponenten umgesetzt.

Ein weiterer Gegenstand der Erfindung sind Umsetzungsprodukte (U) erhältlich durch Reaktion der Verbindungen der Formel (I) mit Organosiliciumverbindungen (B) enthaltend mindestens eine Einheit der Formel

D_{c}Si (OR)_{b}R³ₐO_{(4-a-b-c)/2} (II),

worin
R³ gleich oder verschieden sein kann und einen einwertigen, gegebenenfalls substituierten, SiC-gebundenen, von basischem Stickstoff freien organischen Rest bedeutet,
R gleich oder verschieden sein kann und Wasserstoffatom oder gegebenenfalls substituierte Kohlenwasserstoffreste bedeutet,
D gleich oder verschieden sein kann und einen einwertigen, SiC-gebundenen Rest enthaltend mindestens eine Gruppe -NHR⁴ mit R⁴ gleich Wasserstoffatom oder gegebenenfalls substituierte Kohlenwasserstoffreste bedeutet,
a 0, 1, 2 oder 3, bevorzugt 1, ist,
b 0, 1, 2 oder 3, bevorzugt 1, 2 oder 3, besonders bevorzugt 2 oder 3, ist und
c 0, 1, 2, 3 oder 4, bevorzugt 1, ist,
mit der Maßgabe, dass die Summe aus a+b+c kleiner oder gleich 4 ist und Organosiliciumverbindung (B) mindestens einen Rest der Formel (II) mit mindestens einem Rest D enthält.

Ein weiterer Gegenstand der Erfindung ist ein Verfahren zur Herstellung der Umsetzungsprodukte (U) durch Reaktion von Verbindungen der Formel (I) mit Organosiliciumverbindungen (B) enthaltend mindestens eine Einheit der Formel (II).

Bei den erfindungsgemäß eingesetzten Organosiliciumverbindungen (B) kann es sich sowohl um Silane (B1) handeln, d.h. Verbindunggen der Formel (II) mit a+b+c=4, als auch um Siloxane (B2), d.h. Strukturen enthaltend mindestens eine Einheit der Formel (II) mit a+b+c≤3.

Beispiele für Rest R³ sind die für R¹ angegebenen Beispiele.

Bei Rest R³ handelt es sich vorzugsweise um Kohlenwasserstoffreste mit 1 bis 18 Kohlenstoffatomen, besonders bevorzugt um Kohlenwasserstoffreste mit 1 bis 5 Kohlenstoffatomen, insbesondere um den Methylrest.

Beispiele für gegebenenfalls substituierte Kohlenwasserstoffreste R sind die für Rest R¹ angegebenen Beispiele, sowie Reste CH₃OCH₂CH₂-, CH₃CH₂OCH₂CH₂-, CH₃OCH₂CH₂OCH₂CH-₂- und CH₃CH₂OCH₂CH₂OCH₂CH₂-.

Bei den Resten R handelt es sich vorzugsweise um Wasserstoffatom und Kohlenwasserstoffreste mit 1 bis 18 Kohlenstoffatomen, die durch einen oder mehrere Sauerstoffatome unterbrochen sein können, besonders bevorzugt um Wasserstoffatom und Kohlenwasserstoffreste mit 1 bis 10 Kohlenstoffatomen, insbesondere um den Methyl- und den Ethylrest.

Beispiele für gegebenenfalls substituierte Kohlenwasserstoffreste R⁴ sind die für Rest R¹ angegebenen Beispiele, die mit NH₂-Gruppen substituiert oder durch NH-Gruppen unterbrochen sein können.

Bei den Resten R⁴ handelt es sich vorzugsweise um Wasserstoffatom und Kohlenwasserstoffreste mit 1 bis 18 Kohlenstoffatomen, die mit NH₂-Gruppen substituiert oder durch NH-Gruppen unterbrochen sein können. Besonders bevorzugt handelt es sich bei Rest R⁴ um Wasserstoffatom, n-Butyl-, 2-Aminoethyl-, N-(2-Aminoethyl)-2-aminoethyl- und Cyclohexylrest.

Beispiele für Reste D sind Reste der Formeln H₂N(CH₂)₃-, H₂N(CH₂)₂NH(CH₂)₃-, H₂N(CH₂)₂NH(CH₂)₂NH(CH₂)₃-, H₃CNH(CH₂)₃-, C₂H₅NH(CH₂)₃-, C₃H₇NH(CH₂)₃-, C₄H₉NH(CH₂)₃-, C5H₁₁NH(CH₂)₃-, C₆H₁₃NH (CH₂)₃-, C₇H₁₅NH(CH₂)₃-, H₂N(CH₂)₄-, H₂N-CH₂-CH(CH₃)-CH₂-, H₂N(CH₂)₅-, cyclo-C₅H₉NH(CH₂)₃-, cyclo-C₆H₁₁NH(CH₂)₃-, Phenyl-NH(CH₂)₃-, H₂N(CH₂)-, H₂N(CH₂)₂NH(CH₂)-, H₂N(CH₂)₂NH(CH₂)₂NH(CH₂)-, H₃CNH (CH₂)-, C₂H₅NH (CH₂)-, C₃H₇NH (CH₂)-, C₄H₉NH (CH₂)-, C₅H₁₁NH(CH₂)-, C₆H₁₃NH(CH₂)-, C₇H₁₅NH(CH₂)-, cyclo-C₅H₉NH(CH₂)-, cyclo-C₆H₁₁NH(CH₂)-, Phenyl-NH(CH₂)-, (CH₃O)₃Si(CH₂)₃NH(CH₂)₃-, (C₂H₅O)₃Si(CH₂)₃NH(CH₂)₃-, (CH₃O)₂(CH₃)Si(CH₂)₃NH(CH₂)₃- und (C₂H₅O)₂(CH₃) Si (CH₂)₃NH(CH₂)₃-.

Bevorzugt handelt es sich bei Rest D um SiC-gebundene Kohlenwasserstoffreste mit mindestens einer Gruppe -NHR⁴, besonders bevorzugt um den H₂N(CH₂)₃-, H₂N(CH₂)₂NH(CH₂)₃-, cyclo-C₆H₁₁NH(CH₂)₃-, n-C₄H₉NH(CH₂)- und cyclo-C₆H₁₁NH(CH₂)-Rest.

Beispiele für die erfindungsgemäß gegebenenfalls eingesetzten Silane (B1) sind H₂N(CH₂)₃-Si(OCH₃)₃, H₂N(CH₂)₃-Si(OC₂H₅)₃, H₂N(CH₂)₃-Si(OCH₃)₂CH₃, H₂N(CH₂)₃-Si(OC₂H₅)₂CH₃, H₂N(CH₂)₂NH(CH₂)₃-Si(OCH₃)₃, H₂N(CH₂)₂NH(CH₂)₃-Si(OC₂H₅)₃, H₂N(CH₂)₂NH(CH₂)₃-Si(OC₂H₅)₂CH₃ n-C₄H₉NH(CH₂)-Si(OCH₃)₃, n-C₄H₉NH(CH₂)-Si(OC₂H₅)₂CH₃ n-C₄H₉NH(CH₂)-Si(OCH₃)₂CH₃, n-C₄H₉NH(CH₂)-Si(OC₂H₅)₃, n-C₄H₉NH(CH₂)-Si(OCH₃)₃, n-C₄H₉NH(CH₂)-Si(OC₂H₅)₂CH₃ n-C₄H₉NH(CH₂)-Si(OCH₃)₂CH₃, cyclo-C₆H₁₁NH(CH₂)-Si(OC₂H₅)₃, cyclo-C₆H₁₁NH(CH₂)-Si(OCH₃)₃, cyclo-C₆H₁₁NH(CH₂)-Si(OC₂H₅)₂CH₃ cyclo-C₆H₁₁NH(CH₂)-Si(OCH₃)₂CH₃, cyclo-C₆H₁₁NH(CH₂)-Si(OC₂H₅)₃. cyclo-C₆H₁₁NH(CH₂)-Si(OCH₃)₃, cyclo-C₆H₁₁NH(CH₂)-Si(OC₂H₅)₂CH₃ cyclo-C₆H₁₁NH(CH₂)-Si(OCH₃)₂CH₃ und cyclo-C₆H₁₁NH(CH₂)-Si(OC₂H₅)₃.

Bei den Siloxanen (B2) kann es sich um reine Siloxane handeln, also Verbindungen bestehend aus Einheiten der Formel (II) oder auch um eine Siloxanmatrix, d.h. ein Material mit mindestens einer chemisch gebundenen Einheit der Formel (II).

Beispiele für Komponente (B2) sind Polydimethylsiloxane, bei denen mindestens eine Methylgruppe durch einen Rest D ersetzt ist. Weitere Beispiele sind Methylsiliconharze, bei denen mindestens eine Methylgruppe durch einen Rest D ersetzt ist, sowie elastomere Polydimethylsiloxannetzwerke, bei denen mindestens eine Methylgruppe durch einen Rest D ersetzt ist.

Die erfindungsgemäße Umsetzung (Michael-Addition) findet bei Temperaturen von bevorzugt 15 bis 100°C, besonders bevorzugt bei Raumtemperatur, und bevorzugt beim Druck der umgebenden Atmosphäre, also in etwa 800 bis 1100 hPa, statt.

Bei der erfindungsgemäßen Umsetzung werden Verbindungen der Formel (I) und in den Organosiliciumverbindungen (B) enthaltene NH- oder NH₂-Gruppen bevorzugt in einem Molverhältnis von 1:1 bis 2:1, besonders bevorzugt 1:1, eingesetzt.

Enthält beispielsweise Komponente (B) NH₂-Gruppen, gibt es die Möglichkeit der Umsetzung mit Verbindungen der Formel (I) im Molverhältnis von 1:1 oder 1:2, bei NH-Gruppen natürlich nur 1:1.

Bei den im erfindungsgemäßen Verfahren eingesetzten Komponenten kann es sich jeweils um eine Art einer solchen Komponente wie auch um ein Gemisch aus mindestens zwei Arten einer jeweiligen Komponente handeln.

Die in dem erfindungsgemäßen Verfahren eingesetzten Komponenten (B) sind handelsübliche Produkte bzw. können nach in der Chemie gängigen Verfahren hergestellt werden.

Beispiele für erfindungsgemäße Umsetzungsprodukte sind 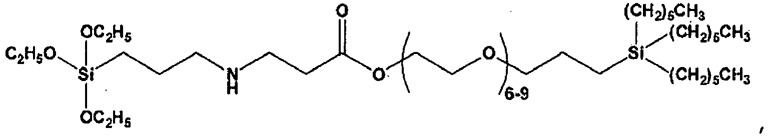 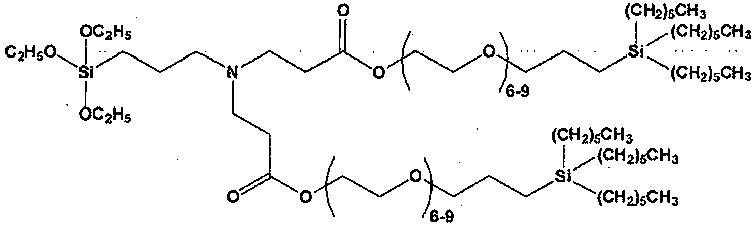 und 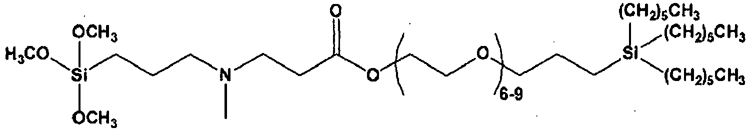 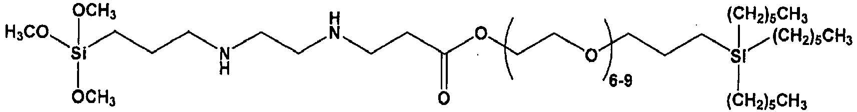 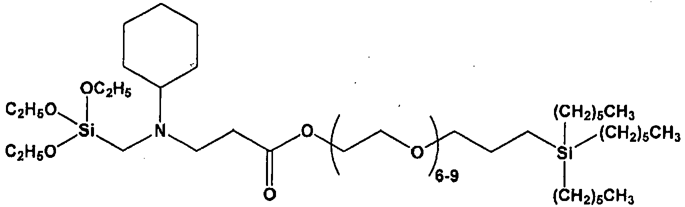 sowie Oberflächen, die mindestens einen kovalent gebundenen Rest aufweisen, der sich durch die Umsetzung der Aminogruppe in Rest D der Formel (II) mit Verbindungen der Formel (I) ergibt, wie beispielsweise

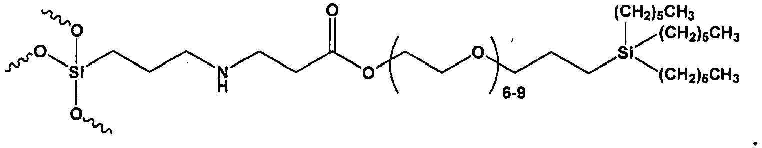

Die erfindungsgemäßen Umsetzungsprodukte (U) können überall da eingesetzt bzw. hergestellt werden, wo Hydrophilie erzeugt werden soll, wie beispielsweise in vernetzbaren Massen und zur Modifizierung von Oberflächen.

So ist es möglich, die erfindungsgemäßen Umsetzungsprodukte (U) noch nicht ausgehärteten Siliconelastomermischungen direkt zuzusetzen. Des Weiteren ist es möglich die Umsetzungsprodukte (U) in den noch nicht ausgehärteten Siliconelastomermischungen dadurch herzustellen, dass den Mischungen die erfindungsgemäßen Verbindungen der Formel (I) und die entsprechenden Aminosilane (B1) im gewünschten Molverhältnis zugesetzt werden. Die Reihenfolge der Zugabe der Einzelkomponenten ist dabei unerheblich. Die hydrophile Oberfläche entsteht dabei jeweils nach dem Aushärten der vernetzbaren Massen.

Ein weiterer Gegenstand der Erfindung sind vernetzbare Massen enthaltend erfindungsgemäßes Umsetzungsprodukt (U) oder Verbindung der Formel (I) zusammen mit Komponente (B).

Bei den erfindungsgemäßen Massen kann es sich um beliebige, bisher bekannte Typen von durch Kondensation zu Elastomeren vernetzbaren Massen auf der Basis von Organosiliciumverbindungen handeln, wie beispielsweise einkomponentige oder zweikomponentige vulkanisierbare Organopolysiloxanmassen. Die vernetzbaren Massen können dabei frei von Füllstoffen sein, können aber auch aktive oder nicht aktive Füllstoffe enthalten.

Art und Menge der üblicherweise in solchen Massen verwendeten Komponenten sind bereits bekannt. Bevorzugt handelt es sich bei den erfindungsgemäßen vernetzbaren Massen um solche, die neben Umsetzungsprodukt (U) oder Verbindung der Formel (I) zusammen mit Komponente (B) Organopolysiloxane mit mindestens zwei kondensationsfähigen Resten, gegebenenfalls Vernetzer mit mindestens drei hydrolysierbaren Resten, gegebenenfalls Kondensationskatalysator, gegebenenfalls Füllstoffe und gegebenenfalls Additive enthalten.

Bei den erfindungsgemäßen Massen handelt es sich bevorzugt um einkomponentige, unter Ausschluss von Wasser lagerfähige, bei Zutritt von Wasser bei Raumtemperatur vernetzbare Massen (RTV-1). Bei den erfindungsgemäßen Massen kann es sich aber auch um zweikomponentige durch Kondensationsreaktion vernetzbare Massen handeln.

Die Vernetzung der erfindungsgemäßen Massen kann unter den dafür bekannten Bedingungen durchgeführt werden. So reicht z.B. bei den besonders bevorzugten RTV-1-Massen der übliche Wassergehalt der Luft aus, wobei die Vernetzung vorzugsweise bei Raumtemperatur und dem Druck der umgebenden Atmosphäre, also etwa 900 bis 1100 hPa, durchgeführt wird.

Ein weiterer Gegenstand der vorliegenden Erfindung sind Formkörper, hergestellt durch Vernetzung der erfindungsgemäßen Massen.

In einer weiteren Ausführungsform werden die erfindungsgemäßen Verbindungen der Formel (I) nach dem Aushärten von aminosilanhaltigen Siliconelastomemischungen nachträglich auf die Siliconelastomeroberflächen (B2) aufgetragen und reagieren gelassen. In einer weiteren Ausführungsform werden die erfindungsgemäßen Umsetzungsprodukte (U) bzw. eine Mischung aus Verbindung der Formel (I) und Komponente (B1) auf die Oberfläche von ausgehärteten Siliconelastomeroberflächen aufgetragen, wobei diese Siliconelastomere weitere Aminosilane enthalten können, aber auch frei von Aminosilanen sein können. In einer weiteren Ausführungsform können zunächst auf ausgehärtete aminfreie Siliconelastomeroberflächen Aminosilane (B1) aufgetragen und so Komponente (B2) hergestellt werden. Danach werden die erfindungsgemäßen Verbindungen der Formel (I) aufgetragen und reagieren gelassen.

Ein weiterer Gegenstand der Erfindung ist ein Verfahren zur Modifizierung von Oberflächen von Substraten, indem die erfindungsgemäßen Umsetzungsprodukte (U) aufgetragen werden bzw. eine Mischung aus Verbindung der Formel (I) und Komponente (B) auf die Oberfläche des Substrats aufgetragen und reagieren gelassen werden.

Bei den erfindungsgemäß eingesetzten Substraten handelt es sich bevorzugt um ausgehärtete Siliconelastomere, Glasoberflächen, Oberflächen von silicatischen Baustoffen, wie Beton, Steinzeug und Porzellan, oder Metalle, wie Stahl und Aluminium, sowie Kunststoffe, wie PVC, PMMA und Polycarbonat.

In all den Fällen, in denen die Umsetzungsprodukte (U) oder Verbindungen der Formel (I) und Komponente (B1) auf Substratoberflächen aufgetragen werden, ist die Verwendung eines organischen Lösungsmittels, wie z.B. Mischungen von aliphatischen Kohlenwasserstoffen, beispielsweise erhältlich unter der Handelsbezeichnung "Shellsol D60", oder Ethern, wie z.B. Tetrahydrofuran, bevorzugt. Eine weitere bevorzugte Variante ist die Verwendung der Umsetzungsprodukte (U) oder der Mischungen von Verbindungen der Formel (I) mit Komponente (B1) in wässriger Lösung oder als Emulsion. Das Auftragen der jeweiligen Substanz kann nach bekannten Methoden erfolgen, wie beispielsweise durch Pinseln, Wischen, Sprühen, Auftrag mit einer Rolle oder Tauchen.

Nach erfolgter Behandlung der Oberflächen können diese von den gegebenenfalls eingesetzten Lösungsmitteln auf an sich bekannte Art und Weise, wie etwa durch sog. natürliche Trocknung, d.h. Verdampfen bei Raumtemperatur und Druck der umgebenden Atmosphäre, befreit werden.

Die erfindungsgemäß modifizierten Oberflächen sind dauerhaft hydrophil, was sich leicht am Kontaktwinkel ablesen lässt, der je nach Menge und Art der aufgetragenen Verbindungen bis auf Werte von 20° reduziert wird.

Die Kontaktwinkelbestimmung ist bereits bekannt. Dabei wird der Kontaktwinkel θ einer fluiden Phase (2) auf einer festen Phase (3) mit einer zweiten fluiden Phase (1) als umgebender Phase gemessen. Hierzu sei z.B. auf "Wettability" edited by John C. Berg, Surfactant Series Band 49; Marcell Dekker Inc. 1993 ISBN 0-8247-9046-4, Kapitel 5 T.D. Blake: "Dynamic Contact Angles and Wetting Kinetics" insbesondere auf S. 252, 1. Absatz und Abbildung 1b verwiesen.

Die Erfindung betrifft darüber hinaus weitere Verfahren, Oberflächen von Gegenständen durch Aufbringen von Verbindungen der Formel (I) zu hydrophilisieren, mit der Maßgabe, dass an der Oberfläche dieser Gegenstände Gruppen vorhanden sein müssen, die mit der Acrylsäurefunktion reagieren können.

Die erfindungsgemäßen Verbindungen der Formel (I) haben den Vorteil, dass sie leicht herzustellen sind und bereits in geringer Menge eine sehr stark hydrophilisierende Wirkung haben, selbst wenn man die Verbindungen vernetzbaren Massen zusetzt. Darüber hinaus bleibt der Effekt auch über längere Zeit erhalten, d.h. er verringert sich nicht dadurch, dass die hydrophilisierende Schicht wieder durch überwandernde Siloxane hydrophob wird.

Die erfindungsgemäßen Umsetzungsprodukte (U) haben den Vorteil, dass sie Siloxanelastomeroberflächen bereits in geringen Mengen eine permanente Hydrophilie verleihen.

In den nachstehend beschriebenen Beispielen beziehen sich alle Viskositätsangaben auf eine Temperatur von 25°C. Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, sowie bei einer relativen Luftfeuchtigkeit von etwa 50 % durchgeführt. Des Weiteren beziehen sich alle Angaben von Teilen und Prozentsätzen, soweit nichts anderes angegeben ist, auf das Gewicht.

In den nachfolgenden Beispielen wurden die Kontaktwinkel an einem Ramé Hart NRL CA Goniometer durchgeführt. Das verwendete Wasser hatte eine Leitfähigkeit von 18 MΩ·cm. Es wurden Tropfen mit einem Volumen von 20 µl verwendet.

Die Shore-A-Härte wird nach DIN (Deutsche Industrie Norm) 53505 (Ausgabe August 2000) bestimmt.

Die Lagerung der Proben der nachfolgenden Beispiele erfolgte bei 23°C und 50% relativer Luftfeuchte, falls nicht anders angegeben.

### Beispiel 1

### α-Acryloyl-ω-triethylsilylpropylpoly(ethylenglycol) [APC2]

Durch eine Mischung aus 9,38 g (24 mmol) α-Allyl-ω-hydroxypoly(ethylenglycol) mit einem Molekulargewicht von ca. 390 g/mol, 2,98 g (25 mmol) Triethylsilan und 0,0448 g Wilkinson-Katalysator (Tris(triphenylphosphin)rhodium(I)chlorid) wurden bei Raumtemperatur 1 Stunde lang trockene Luft geleitet. Anschließend wurde die Mischung bei Raumtemperatur für eine Dauer von 12 Stunden weiter gerührt. Danach wurde eine Lösung bestehend aus 1,0 g Essigsäure, 1 ml dest. Wasser und 50 ml THF zugegeben und weitere 5 Stunden bei Raumtemperatur gerührt. Schließlich wurden 5 g MgO zugegeben, anschließend der Feststoff abfiltriert und das THF im Vakuum bei 10 mbar abgezogen. Der Rückstand wurde in Acetonitril gelöst. Diese Lösung wurde mit Hexan extrahiert (3 mal 10 ml). Die Hexan-Phase wurde verworfen. Anschließend wurde das Acetonitril unter vermindertem Druck abdestilliert. Der Rückstand wurde weiter gereinigt, indem er durch eine kurze mit Silicagel gefüllte Säule gegeben wurde, wobei eine Mischung aus Methylenchlorid/Hexan (1:1) als Eluent verwendet wurde. Nach Abdampfen der Lösungsmittel wurden 9,1 g (74 %) reines α-Hydroxy-ω-triethylsilylpropylpolyethylenglycol erhalten.

8,0 g (15,9 mmol) des so erhaltenen α-Hydroxy-ω-triethylsilylpropylpolyethylenglycols und 16,2 g (159 mmol) Triethylamin wurden in 200 ml Diethylether gelöst. Zu dieser Lösung wurden innerhalb 30 min 1,6 ml (17,5 mmol) Acrylsäurechlorid bei 0°C unter Rühren zugetropft. Nach beendeter Zugabe wurde die Kühlung entfernt und die Mischung weiter für eine Dauer von 12 Stunden bei Raumtemperatur gerührt. Anschließend wurde vom ausgefallenen Feststoff abgetrennt und die etherische Lösung unter vermindertem Druck vom Lösungsmittel befreit. Der Rückstand wurde wiederum über eine Silicagel-Säule unter Verwendung von Methylenchlorid/Hexan als Eluent gereinigt. Es wurden so 7,63 g (81%) des gewünschten Zielproduktes **α-Acryloyl-ω-triethylsilyl-propylpoly(ethylenglycol)** erhalten. Die Gesamtausbeute beider Schritte betrug 60%.

### Beispiel 2

### α-Acryloyl-ω-tri-n-hexylsilylpropylpoly(ethylenglycol) [APC6]

Der Versuch gemäß Beispiel 1 wurde wiederholt unter Verwendung von zunächst 9,98 g (28,5 mmol) α-Allyl-ω-hydroxypoly(ethylenglycol) mit einem Molekulargewicht von ca. 390 g/mol und 9,12 g (31,4 mmol) Tri-n-hexylsilan. Es wurden 9,8 g (53,5 %) reines α-Hydroxy-ω-tri-n-hexylsilylpropylpolyethylenglycol erhalten, von dem 8,0 g (11,9 mmol) gemäß der in Beispiel 1 beschriebenen Verfahrensweise mit Acrylsäurechlorid zu 6,9 g (78%) Zielprodukt **α-Acryloyl-ω-tri-n-hexylsilylpropylpoly(ethylenglycol)** umgesetzt wurden. Die Gesamtausbeute beider Schritte betrug 41,7%.

### Beispiel 3

### α-Acryloyl-ω-tri-n-octylsilylpropylpoly(ethylenglycol) [APC8]

Die in Beispiel 1 beschriebene Verfahrensweise wurde wiederholt unter Verwendung von 3,53 g (9,1 mmol) α-Allyl-ω-hydroxypoly(ethylenglycol) mit einem Molekulargewicht von ca. 390 g/mol und 3,69 g (10,0 mmol) Tri-n-octylsilan. Es wurden 2,69 g (39 %) reines α-Hydroxy-ω-tri-n-octylsilylpropylpolyethylenglycol erhalten, von dem 2,0 g (2,64 mmol) gemäß der in Beispiel 1 beschriebenen Verfahrensweise mit Acrylsäurechlorid zu 1,65 g (75%) Zielprodukt **α-Acryloyl-ω-tri-n-octylsilylpropylpoly(ethylenglycol)** umgesetzt wurden. Die Gesamtausbeute beider Schritte betrug 29,2%.

### Beispiele 4-6

Es wurden 1,0 g eines α,ω-Dihydroxypolydimethylsiloxan mit einer Viskosität von 2 000 mPas bei 25°C mit 0,024 g Aminopropyltriethoxysilan und den in Tabelle 1 angegebenen Mengen der gemäß den Beispielen 1 bis 3 hergestellten acryloxyfuntionellen Polyethylenglycole vermischt. Die Mengen wurden so berechnet, dass pro mol Aminopropyltriethoxysilan 2 mol der acryloxyfunktionellen Verbindungen anwesend waren. Anschließend wurden 0,0035 g Dibutylzinndilaurat zugegeben und die Masse 1 min intensiv vermischt und in eine kleine Petrischale gegossen, so dass etwa eine Schichtdicke von 1 mm erhalten wurde. Nach 24 Stunden waren alle Mischungen zu einem Siliconelastomer mit einer Shore-A-Härte von 10 ausgehärtet. Anschließend wurden die Randwinkel eines Wassertropfens (20 µl) in Abhängigkeit von der Zeit gemessen. Die Ergebnisse sind in Tabelle 1 zusammengefasst.

### Vergleichsbeispiel V1

Es wurden 1,0g eines α,ω-Dihydroxypolydimethylsiloxan mit einer Viskosität von 2 000 mPas bei 25°C mit 0,024 g Aminopropyltriethoxysilan und 0,09 g eines Methoxypoly(ethylenglycol)mono-acrylats (CAS-Nr. 32171-39-4, Molekulargewicht Mₙ ca. 480 g/mol, erhältlich unter der Nummer 454990 bei Sigma-Aldrich, in Tabelle 1 als "APM" bezeichnet) vermischt. Anschließend wurden 0,0035 g Dibutylzinndilaurat zugegeben und die Masse 1 min intensiv vermischt und in eine kleine Petrischale gegossen, so dass etwa eine Schichtdicke von 1 mm erhalten wurde. Nach 24 Stunden waren die Mischungen zu einem Siliconelastomer mit einer Shore-A-Härte von 10 ausgehärtet. Anschließend wurden die Randwinkel eines Wassertropfens (20 µl) in Abhängigkeit von der Zeit gemessen. Die Ergebnisse sind in Tabelle 1 zusammengefasst.

**Tabelle 1**

| Beispiel | Verbindung | Menge [g] | Randwinkel in °, gemessen nach | | | | | | | | | |
|---|---|---|---|---|---|---|---|---|---|---|---|---|
| | | | 1 min | 2 min | 3 min | 4 min | 5 min | 6 min | 7 min | 8 min | 9 min | 10 min |
| 4 | APC2 | 0,12 | 43 | 35 | 29 | 25 | 22 | 19 | 18 | 16 | 13 | 11 |
| 5 | APC6 | 0,16 | 36 | 29 | 28 | 25 | 23 | 21 | 19 | 17 | 15 | 12 |
| 6 | APC8 | 0,18 | 38 | 33 | 31 | 31 | 30 | 30 | 30 | 30 | 29 | 29 |
| V1 | APM | 0,09 | 77 | 76 | 73 | 70 | 67 | 67 | 66 | 65 | 63 | 63 |

### Beispiele 7-9

Es wurden 1,0g eines α,ω-methyldimethoxysilylterminierten Polydimethylsiloxans mit einer Viskosität von 80 000 mPas bei 25°C mit 0,024 g Aminopropyltriethoxysilan und den in Tabelle 2 angegebenen Mengen der gemäß den Beispielen 1 bis 3 hergestellten acryloxyfuntionellen Polyethylenglycolen vermischt. Die Mengen wurden so berechnet, dass pro mol Aminopropyltriethoxysilan 2 mol der acryloxyfunktionellen Verbindungen anwesend waren. Anschließend wurden 0,003 g eines Zinnkatalysators (hergestellt durch Umsetzung von 4 Gew.-Teilen Tetraethoxysilan mit 2,2 Gew.-Teilen Dibutylzinndiacetat, wobei das gebildete Ethylacetat abdestilliert wurde) zugegeben und die Masse 1 min intensiv vermischt und in eine kleine Petrischale gegossen, so dass etwa eine Schichtdicke von 1mm erhalten wurde. Das Material härtet unter der Einwirkung von Luftfeuchtigkeit aus. Nach 24 Stunden waren alle Mischungen zu einem Siliconelastomer ausgehärtet. Anschließend wurden die Randwinkel eines Wassertropfens (20 µl) in Abhängigkeit von der Zeit gemessen. Die Ergebnisse sind in Tabelle 2 zusammengefasst.

**Tabelle 2**

| Beispiel | Verbindung | Menge [g] | Randwinkel in °, gemessen nach | | | | | | | | | |
|---|---|---|---|---|---|---|---|---|---|---|---|---|
| | | | 1 min | 2 min | 3 min | 4 min | 5 min | 6 min | 7 min | 8 min | 9 min | 10 min |
| 7 | APC2 | 0,12 | 58 | 49 | 48 | 46 | 42 | 40 | 38 | 36 | 34 | 31 |
| 8 | APC6 | 0,16 | 31 | 28 | 24 | 22 | 21 | | | 19 | 18 | 18 |
| 9 | APC8 | 0,18 | | | 45 | 43 | 40 | 38 | 37 | 35 | 34 | 34 |

### Beispiele 10-12

Es wurden 1,0g eines α,ω-methyldimethoxysilylterminierten Polydimethylsiloxans mit einer Viskosität von 80 000 mPas bei 25°C mit den in Tabelle 3 angegebenen Mengen N-Methyl-3-aminopropyl-trimethoxysilan und den in Tabelle 3 angegebenen Mengen des gemäß Beispiel 1 hergestellten α-Acryloyl-ω-triethylsilylpropyl-poly(ethylenglycol) [APC2] vermischt. Die Mengen wurden so berechnet, dass pro mol N-Methyl-3-aminopropyltrimethoxysilan 1 mol der acryloxyfunktionellen Verbindungen anwesend waren. Anschließend wurden 0,003 g eines Zinnkatalysators (hergestellt durch Umsetzung von 4 Gew.-Teilen Tetraethoxysilan mit 2,2 Gew.-Teilen Dibutylzinndiacetat, wobei das gebildete Ethylacetat abdestilliert wurde) zugegeben und die Masse 1 min intensiv vermischt und in eine kleine Petrischale gegossen, so dass etwa eine Schichtdicke von 1mm erhalten wurde. Das Material härtet unter der Einwirkung von Luftfeuchtigkeit aus. Nach 24 Stunden waren alle Mischungen zu einem Siliconelastomer ausgehärtet. Anschließend wurden die Randwinkel eines Wassertropfens (20 µl) nach 10 min gemessen. Die Ergebnisse sind in Tabelle 3 zusammengefasst.

**Tabelle 3**

| Beispiel | Verbindung | Menge [mg] | Menge an N-Methyl-3-aminopropyltrimethoxysilan | Randwinkel gemessen nach 10 min |
|---|---|---|---|---|
| 10 | APC2 | 61 | 21 mg | 39° |
| 11 | APC2 | 30 | 11 mg | 48° |
| 12 | APC2 | 15 | 5 mg | 60° |

### Beispiele 13-15

Zunächst wurden 0,65 g N-Methyl-3-aminopropyltrimethoxysilan mit 1,83 g α-Acryloyl-ω-triethylsilylpropylpoly(ethylenglycol) [APC2] vermischt und für eine Dauer von 12 Stunden stehen gelassen. Gemäß ¹H-NMR hatten sich dabei entsprechend dem Restgehalt an Doppelbindungen des Acryloylrests 85% des Michael-Additionsproduktes α-(N-Methyl-N-(3-trimethoxysilylpropyl)-3-aminopropionyl)-ω-triethylsilylpropylpoly(ethylenglycol) gebildet. Das so erhaltene Produkt wurde in der in Tabelle 4 angegebenen Menge mit 1,0 g eines α,ω-methyldimethoxysilylterminierten Polydimethylsiloxans mit einer Viskosität von 80 000 mPas bei 25°C und 0,003 g eines Zinnkatalysators (hergestellt durch Umsetzung von 4 Gew.-Teilen Tetraethoxysilan mit 2,2 Gew.-Teilen Dibutylzinndiacetat, wobei das gebildete Ethylacetat abdestilliert wurde) vermischt und in eine kleine Petrischale gegossen, so dass etwa eine Schichtdicke von 1 mm erhalten wurde.

Das Material härtet unter der Einwirkung von Luftfeuchtigkeit aus. Nach 24 Stunden waren alle Mischungen zu einem Siliconelastomer ausgehärtet. Anschließend wurden die Randwinkel eines Wassertropfens (20 µl) nach 10 min gemessen. Die Ergebnisse sind in Tabelle 4 zusammengefasst.

**Tabelle 4**

| Beispiel | Menge an Umsetzungsprodukt von [APC2] mit N-Methylaminopropyltrimethoxysilan | Randwinkel gemessen nach |
|---|---|---|
| | | 10 min |
| 13 | 82 mg | 45° |
| 14 | 41 mg | 54° |
| 15 | 21 mg | 60° |

### Beispiele 16-18

Es wurden 10 g eines α,ω-methyldimethoxysilylterminierten Polydimethylsiloxans mit einer Viskosität von 80 000 mPas bei 25°C mit den in Tabelle 5 angegebenen Mengen N-Methyl-3-aminopropyltrimethoxysilan vermischt. Anschließend wurden 0,03 g eines Zinnkatalysators (hergestellt durch Umsetzung von 4 Gew.-Teilen Tetraethoxysilan mit 2,2 Gew.-Teilen Dibutylzinndiacetat, wobei das gebildete Ethylacetat abdestilliert wurde) zugegeben und die Masse 1 min intensiv vermischt und in eine kleine Petrischale gegossen, so dass etwa eine Schichtdicke von 1 mm erhalten wurde. Das Material härtet unter der Einwirkung von Luftfeuchtigkeit aus. Nach 24 h wurde auf die Oberflächen jeder Probe eine 5 Ma-%ige Lösung von α-Acryloyl-ω-triethylsilylpropylpoly(ethylenglycol) [APC2] in Tetrahydrofuran aufgepinselt. Dabei wurde zunächst ein großer Überschuss an erfindungsgemäßer Verbindung aufgetragen, indem die Lösung satt auf die Oberfläche aufbracht wurde. Die Proben wurden für 10 h bei Raumtemperatur gelagert, wobei das Tetrahydrofuran verdampfte. Der nicht abreagierte Überschuss wurde nun anschließend beseitigt, indem die Proben 3 Mal für jeweils eine Stunde in Methylenchlorid eingelegt wurden. Anschließend wurden die Proben jeweils im Vakuum bei 10 mbar getrocknet. Danach wurden die Randwinkel eines Wassertropfens (20 µl) nach 3 min gemessen. Die Ergebnisse sind in Tabelle 5 zusammengefasst.

**Tabelle 5**

| Beispiel | Menge N-Methylaminopropyltrimethoxysilan | Randwinkel gemessen nach 3 min |
|---|---|---|
| 16 | 220 mg | 56 |
| 17 | 110 mg | 63 |
| 18 | 55 mg | 75 |

### Beispiele 19-21

Es wurden 10 g eines α,ω-methyldimethoxysilylterminierten Polydimethylsiloxans mit einer Viskosität von 80 000 mPas bei 25°C mit den in Tabelle 6 angegebenen Mengen 3-Aminopropyltriethoxysilan vermischt. Anschließend wurden 0,03 g eines Zinnkatalysators (hergestellt durch Umsetzung von 4 Gew.-Teilen Tetraethoxysilan mit 2,2 Gew.-Teilen Dibutylzinndiacetat, wobei das gebildete Ethylacetat abdestilliert wurde) zugegeben und die Masse 1 min intensiv vermischt und in eine kleine Petrischale gegossen, so dass etwa eine Schichtdicke von 1 mm erhalten wurde. Das Material härtet unter der Einwirkung von Luftfeuchtigkeit aus. Nach 24 h wurde auf die Oberflächen jeder Probe eine 5 Ma-%ige Lösung von α-Acryloyl-ω-triethylsilylpropylpoly(ethylenglycol) [APC2] in Tetrahydrofuran aufgepinselt. Dabei wurde zunächst ein großer Überschuss an erfindungsgemäßer Verbindung aufgetragen, indem die Lösung satt auf die Oberfläche aufbracht wurde. Die Proben wurden für 10 h bei Raumtemperatur gelagert, wobei das Tetrahydrofuran verdampfte. Der nicht abreagierte Überschuss wurde nun anschließend beseitigt, indem die Proben 3 Mal für jeweils eine Stunde in Methylenchlorid eingelegt wurden. Anschließend wurden die Proben jeweils im Vakuum bei 10 mbar getrocknet. Danach wurden die Randwinkel eines Wassertropfens (20 µl) nach 3 min gemessen. Die Ergebnisse sind in Tabelle 6 zusammengefasst.

**Tabelle 6**

| Beispiel | Menge 3-Aminopropyltriethoxysilan | Randwinkel gemessen nach 10 min |
|---|---|---|
| 19 | 220 mg | 53 |
| 20 | 110 mg | 57 |
| 21 | 55 mg | 75 |

## Patentansprüche

1. Verbindungen der Formel 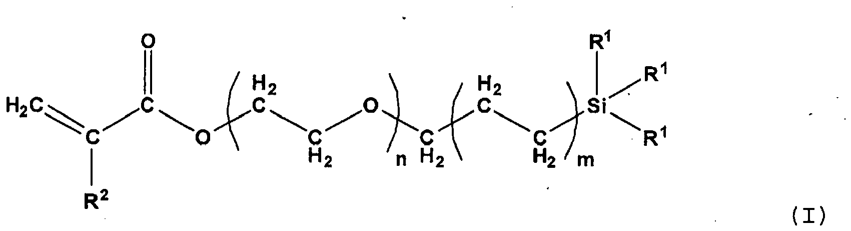 wobei
R¹ gleich oder verschieden sein kann und Kohlenwasserstoffreste bedeutet,
R² Wasserstoffatom oder Methylrest bedeutet,
n eine ganze Zahl von 6 bis 11 ist und
m 0 oder 1 ist,
mit der Maßgabe, dass die Summe der Anzahl der Kohlenstoffatome in den drei Resten R¹ in der Verbindung der Formel (I) 6 bis 24 beträgt.

2. Verbindungen gemäß Anspruch 1, **dadurch gekennzeichnet, dass** die Reste R¹ in Formel (I) die gleiche Bedeutung haben.

3. Verbindungen gemäß Anspruch 1 oder 2, **dadurch gekennzeichnet, dass** es sich bei Rest R¹ um Alkylreste mit 1 bis 12 Kohlenstoffatomen handelt.

4. Verfahren (Verfahren 1) zur Herstellung der Verbindungen der Formel (I) durch Addition von Triorganylsilanen an Polyethylenglycole, die an einem Ende eine OH-Gruppe tragen und am anderen Ende Reste mit aliphatischen Kohlenstoff-Kohlenstoff-Mehrfachbindungen aufweisen, in Anwesenheit von die Anlagerung von Si-gebundenem Wasserstoff an aliphatische Mehrfachbindung fördernden Katalysator und anschließender Umsetzung mit Acrylsäurechlorid oder Methacrylsäurechlorid.

5. Verfahren (Verfahren 2) zur Herstellung der erfindungsgemäßen Verbindungen der Formel (I) mit m=0, **dadurch gekennzeichnet, dass** zunächst ein Hydroxymethyltriorganylsilan mit Etylenoxid umgesetzt wird und das erhaltene, einseitig mit einer Triorganylsilylmethylgruppe terminierte Polyethylenglycol anschließend mit Acrylsäurechlorid oder Methacrylsäurechlorid zur Reaktion gebracht wird.

6. Umsetzungsprodukte (U) erhältlich durch Reaktion von Verbindungen gemäß einem oder mehreren der Ansprüche 1 bis 3 oder hergestellt nach Anspruch 4 oder 5 mit Organosiliciumverbindungen (B) enthaltend mindestens eine Einheit der Formel
D_{c}Si(OR)_{b}R³ₐO_{(4-a-b-e)/2} (II),
worin
R³ gleich oder verschieden sein kann und einen einwertigen, gegebenenfalls substituierten, SiC-gebundenen, von basischem Stickstoff freien organischen Rest bedeutet,
R gleich oder verschieden sein kann und Wasserstoffatom oder gegebenenfalls substituierte Kohlenwasserstoffreste bedeutet,
D gleich oder verschieden sein kann und einen einwertigen, SiC-gebundenen Rest enthaltend mindestens eine Gruppe -NHR⁴ mit R⁴ gleich Wasserstoffatom oder gegebenenfalls substituierte Kohlenwasserstoffreste bedeutet,
a 0, 1, 2 oder 3 ist,
b 0, 1, 2 oder 3 ist und
c 0, 1, 2, 3 oder 4 ist,
mit der Maßgabe, dass die Summe aus a+b+c kleiner oder gleich 4 ist und Organosiliciumverbindung (B) mindestens einen Rest der Formel (II) mit mindestens einem Rest D enthält.

7. Verfahren zur Herstellung der Umsetzungsprodukte (U) durch Reaktion von Verbindungen gemäß einem oder mehreren der Ansprüche 1 bis 3 oder hergestellt nach Anspruch 4 oder 5 mit Organosiliciumverbindungen (B) enthaltend mindestens eine Einheit der Formel
D_{c}Si(OR)_{b}R³ₐO_{(4-a-b-c)/2} (II),
worin
R³ gleich oder verschieden sein kann und einen einwertigen, gegebenenfalls substituierten, SiC-gebundenen, von basischem Stickstoff freien organischen Rest bedeutet,
R gleich oder verschieden sein kann und Wasserstoffatom oder gegebenenfalls substituierte Kohlenwasserstoffreste bedeutet,
D gleich oder verschieden sein kann und einen einwertigen, SiC-gebundenen Rest enthaltend mindestens eine Gruppe -NHR⁴ mit R⁴ gleich Wasserstoffatom oder gegebenenfalls substituierte Kohlenwasserstoffreste bedeutet,
a 0, 1, 2 oder 3 ist,
b 0, 1, 2 oder 3 ist und
c 0, 1, 2, 3 der 4 ist,
mit der Maßgabe, dass die Summe aus a+b+c kleiner oder gleich 4 ist und Organosiliciumverbindung (B) mindestens einen Rest der Formel (II) mit mindestens einem Rest D enthält.

8. Verfahren gemäß Anspruch 7, **dadurch gekennzeichnet, dass** es sich bei Komponente (B) um Silane (B1) handelt, d.h. Verbindungen der Formel (II) mit a+b+c=4.

9. Verfahren gemäß Anspruch 7, **dadurch gekennzeichnet, dass** es sich bei Komponente (B) um Siloxane (B2) handelt, d.h. Strukturen enthaltend mindestens eine Einheit der Formel (II) mit a+b+c≤3.

10. Vernetzbare Massen enthaltend Umsetzungsprodukt (U) gemäß Anspruch 6 oder hergestellt gemäß einem oder mehreren der Ansprüche 7 bis 9 oder Verbindung der Formel (I) zusammen mit Komponente (B).

11. Vernetzbare Massen gemäß Anspruch 10, **dadurch gekennzeichnet, dass** es sich um einkomponentige, unter Ausschluss von Wasser lagerfähige, bei Zutritt von Wasser bei Raumtemperatur vernetzbare Massen (RTV-1) handelt.

12. Formkörper, hergestellt durch Vernetzung der Massen gemäß Anspruch 10 oder 11.

13. Verfahren zur Modifizierung von Oberflächen von Substraten, indem die Umsetzungsprodukte (U) gemäß Anspruch 6 oder hergestellt gemäß einem oder mehreren der Ansprüche 7 bis 9 bzw. eine Mischung aus Verbindung der Formel (I) und Komponente (B) auf die Oberfläche des Substrats aufgetragen werden.

14. Verfahren zur Modifizierung von Oberflächen von Substraten, indem Verbindungen der Formel (I) auf die Oberfläche eines Substrats, welches über Gruppen verfügt, die mit der Acrylsäurefunktion reagieren können, aufgetragen werden.

## Claims

1. Compounds of the formula 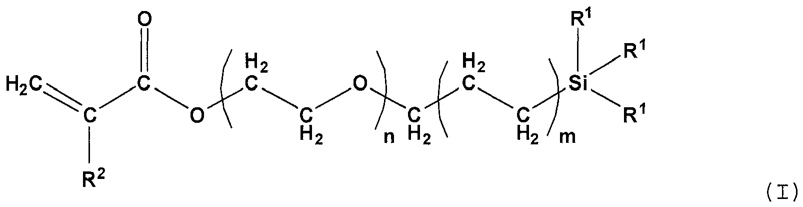 where
R¹ can be identical or different and is hydrocarbon radicals,
R² is hydrogen atom or methyl radical,
n is an integer from 6 to 11 and
m is 0 or 1,
with the proviso that the sum of the number of carbon atoms in the three radicals R¹ in the compound of the formula (I) is 6 to 24.

2. Compounds according to Claim 1, **characterized in that** the radicals R¹ in formula (I) have the same meaning.

3. Compounds according to Claim 1 or 2, **characterized in that** the radical R¹ is alkyl radicals having 1 to 12 carbon atoms.

4. Process (process 1) for producing the compounds of the formula (I) by addition of triorganylsilanes onto polyethylene glycols which carry an OH group on one end and have radicals with aliphatic carbon-carbon multiple bonds on the other end, in the presence of catalyst promoting the addition of Si-bonded hydrogen onto aliphatic multiple bond, and subsequent reaction with acryloyl chloride or methacryloyl chloride.

5. Process (process 2) for producing the compounds according to the invention of the formula (I) where m = 0, **characterized in that** firstly a hydroxymethyltriorganylsilane is reacted with ethylene oxide and the resulting polyethylene glycol terminated at one end with a triorganylsilylmethyl group is then reacted with acryloyl chloride or methacryloyl chloride.

6. Reaction products (U) obtainable by reacting compounds according to one or more of Claims 1 to 3 or produced according to Claim 4 or 5 with organosilicon compounds (B) comprising at least one unit of the formula
D_{c}Si(OR)_{b}R³ₐO_{(4-a-b-c)/2} (II),
in which
R³ can be identical or different and is a monovalent, optionally substituted, SiC-bonded organic radical free from basic nitrogen,
R can be identical or different and is hydrogen atom or optionally substituted hydrocarbon radicals,
D can be identical or different and is a monovalent, SiC-bonded radical comprising at least one group -NHR⁴ where R⁴ is hydrogen atom or optionally substituted hydrocarbon radicals,
a is 0, 1, 2 or 3,
b is 0, 1, 2 or 3 and
c is 0, 1, 2, 3 or 4,
with the proviso that the sum of a + b + c is less than or equal to 4 and organosilicon compound (B) comprises at least one radical of the formula (II) with at least one radical D.

7. Process for producing the reaction products (U) by reacting compounds according to one or more of Claims 1 to 3 or produced according to Claim 4 or 5 with organosilicon compounds (B) comprising at least one unit of the formula
D_{c}Si(OR)_{b}R³ₐO_{(4-a-b-c)/2} (II),
in which
R³ can be identical or different and is a monovalent, optionally substituted, SiC-bonded organic radical free from basic nitrogen,
R can be identical or different and is hydrogen atom or optionally substituted hydrocarbon radicals,
D can be identical or different and is a monovalent, SiC-bonded radical comprising at least one group -NHR⁴ where R⁴ is hydrogen atom or optionally substituted hydrocarbon radicals,
a is 0, 1, 2 or 3,
b is 0, 1, 2 or 3 and
c is 0, 1, 2, 3 or 4,
with the proviso that the sum of a + b + c is less than or equal to 4 and organosilicon compound (B) comprises at least one radical of the formula (II) with at least one radical D.

8. Process according to Claim 7, **characterized in that** component (B) is silanes (B1), i.e. compounds of the formula (II) where a + b + c = 4.

9. Process according to Claim 7, **characterized in that** component (B) is siloxanes (B2), i.e. structures containing at least one unit of the formula (II) where a + b + c ≤ 3.

10. Crosslinkable masses comprising reaction product (U) according to Claim 6 or produced according to one or more of Claims 7 to 9 or compound of the formula (I) together with component (B).

11. Crosslinkable masses according to Claim 10, **characterized in that** they are single-component masses that are stored under exclusion of water and crosslinkable at room temperature upon ingress of water (RTV-1).

12. Molding produced by crosslinking the masses according to Claim 10 or 11.

13. Process for modifying surfaces of substrates, in which the reaction products (U) according to Claim 6 or produced according to one or more of Claims 7 to 9 or a mixture of compound of the formula (I) and component (B) are applied to the surface of the substrate.

14. Process for modifying surfaces of substrates in which compounds of the formula (I) are applied to the surface of a substrate which has groups which can react with the acrylic acid function.

## Revendications

1. Composés de formule 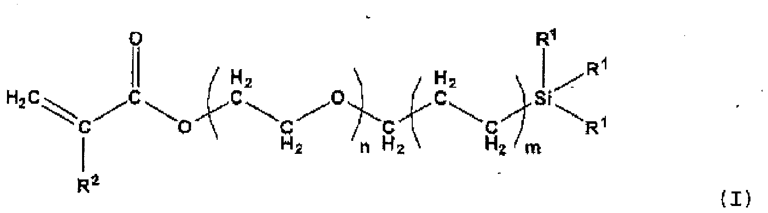 dans laquelle
R¹ peut être le même ou différent et représente des radicaux hydrocarbonés,
R² représente un atome d'hydrogène ou le radical méthyle,
n est un nombre entier valant de 6 à 11 et
m est 0 ou 1,
étant entendu que la somme du nombre des atomes de carbone dans les trois radicaux R¹ dans le composé de formule (I) vaut de 6 à 24.

2. Composés selon la revendication 1, **caractérisés en ce que** les radicaux R¹ dans la formule (I) ont la même signification.

3. Composés selon la revendication 1 ou 2, **caractérisés en ce que** pour ce qui est du radical R¹ il s'agit de radicaux alkyle ayant de 1 à 12 atomes de carbone.

4. Procédé (procédé 1) pour la préparation des composés de formule (I) par fixation par addition de triorganylsilanes sur des polyéthylèneglycols qui portent à une extrémité un groupe OH et comportent à l'autre extrémité des radicaux comportant des liaisons multiples carbone-carbone aliphatiques, en présence de catalyseur favorisant la fixation par addition d'hydrogène lié à Si sur une liaison multiple aliphatique et mise en réaction subséquente avec du chlorure d'acryloyle ou du chlorure de méthacryloyle.

5. Procédé (procédé 2) pour la préparation des composés selon l'invention de formule (I) où m = 0, **caractérisé en ce que** d'abord on fait réagir un hydroxyméthyltriorganylsilane avec de l'oxyde d'éthylène et ensuite on met en réaction le polyéthylèneglycol terminé par un groupe triorganyl-silylméthyle avec du chlorure d'acryloyle ou du chlorure de méthacryloyle.

6. Produits de réaction (U) pouvant être obtenus par réaction de composés selon une ou plusieurs des revendications 1 à 3 ou préparés selon la réaction 4 ou 5 avec des composés organosiliciés (B) contenant au moins une unité de formule
D_{c}Si(OR)_{b}R³aO_{(4-a-b-c)/2} (II),
dans laquelle
R³ peut être le même ou différent et représente un radical organique monovalent, exempt d'azote basique, éventuellement substitué, lié par une liaison SiC,
R peut être le même ou différent et représente un atome d'hydrogène ou des radicaux hydrocarbonés éventuellement substitués,
D peut être le même ou différent et représente un radical monovalent, lié par une liaison SiC, contenant au moins un groupe -NHR⁴ où R⁴ est un atome d'hydrogène ou représente des radicaux hydrocarbonés éventuellement substitués,
a est 0, 1, 2 ou 3,
b est 0, 1, 2 ou 3 et
c est 0, 1, 2, 3 ou 4,
étant entendu que la somme de a+b+c est inférieure ou égale à 4 et le composé organosilicié (B) contient au moins un radical de formule (II) comportant au moins un radical D.

7. Procédé pour la préparation des produits de réaction (U) par réaction de composés selon une ou plusieurs des revendications 1 à 3 ou préparés selon la revendication 4 ou 5 avec des composés organosiliciés (B) contenant au moins une unité de formule
D_{c}Si(OR)_{b}R³ₐO_{(4-a-b-c)/2} (II),
dans laquelle
R³ peut être le même ou différent et représente un radical organique monovalent, exempt d'azote basique, éventuellement substitué, lié par une liaison SiC,
R peut être le même ou différent et représente un atome d'hydrogène ou des radicaux hydrocarbonés éventuellement substitués,
D peut être le même ou différent et représente un radical monovalent, lié par une liaison SiC, contenant au moins un groupe -NHR⁴ où R⁴ est un atome d'hydrogène ou représente des radicaux hydrocarbonés éventuellement substitués,
a est 0, 1, 2 ou 3,
b est 0, 1, 2 ou 3 et
c est 0, 1, 2, 3 ou 4,
étant entendu que la somme de a+b+c est inférieure ou égale à 4 et le composé organosilicié (B) contient au moins un radical de formule (II) comportant au moins un radical D.

8. Procédé selon la revendication 7, **caractérisé en ce que** pour ce qui est du composant (B) il s'agit de silanes (B1), c'est-à-dire de composés de formule (II) où a+b+c=4.

9. Procédé selon la revendication 7, **caractérisé en ce que** pour ce qui est du composant (B) il s'agit de siloxanes (B2), c'est-à-dire de structures contenant au moins une unité de formule (II) où a+b+c≤3.

10. Matières réticulables contenant un produit de réaction (U) selon la revendication 6 ou préparé selon une ou plusieurs des revendications 7 à 9 ou un composé de formule (I) conjointement avec un composant (B).

11. Matières réticulables selon la revendication 10, **caractérisées en ce qu'**il s'agit de matières réticulables monocomposant, stables au stockage à l'abri de l'eau, réticulables à la température ambiante lors d'entrée d'eau (RTV-1).

12. Corps moulé, produit par réticulation des matières selon la revendication 10 ou 11.

13. Procédé pour la modification de surfaces de substrats, par application sur la surface du substrat des produits de réaction (U) selon la revendication 6 ou préparés selon une ou plusieurs des revendications 7 à 9 ou d'un mélange de composé de formule (I) et de composant (B).

14. Procédé pour la modification de surfaces de substrats, par application de composés de formule (I) sur la surface d'un substrat qui est doté de groupes qui peuvent réagir avec la fonction acide acrylique.
